# EUROPÄISCHE PATENTSCHRIFT

(11) **EP 2 823 881 B1**
(45) Veröffentlichungstag und Bekanntmachung des Hinweises auf die Patenterteilung: **03.05.2017**
(21) Anmeldenummer: 14174628.9
(22) Anmeldetag: 27.06.2014
(51) Int. Cl.: B01F 15/02, B01F 11/00, B01F 13/00

(54) **Vorrichtung und Verfahren zum Lagern und Mischen von Knochenzement**
Device and method for storing and mixing bone cement
Dispositif et procédé de stockage et de mélange de ciment osseux

(30) Priorität: 08.07.2013 DE 102013011295
(43) Veröffentlichungstag der Anmeldung: 14.01.2015
(73) Patentinhaber: Heraeus Medical GmbH, 61273 Wehrheim (DE)
(72) Erfinder: Vogt, Sebastian, Dr., 99092 Erfurt (DE)
(74) Vertreter: Schultheiss & Sterzel Patentanwälte PartG mbB

(56) Entgegenhaltungen:
- WO-A1-90/13264
- WO-A1-2011/083095
- WO-A1-2012/174670
- DE-A1- 10 242 984
- US-A1- 2010 046 315

## Beschreibung

Die Erfindung betrifft eine Vorrichtung zur Lagerung, Vermischung und Applikation von Polymethylmethacrylat-Knochenzement und ein Verfahren zum Herstellen eines Polymethylmethacrylat-Knochenzements mit einer solchen Vorrichtung.

Gegenstand der Erfindung ist somit eine Vorrichtung zur Lagerung und Vermischung von Polymethylmethacrylat-Knochenzement, der vor der Vermischung, während der Lagerung, aus einer pastenförmigen Komponente A und dazu separaten pulverförmigen oder pastenförmigen Komponente B besteht, sowie ein Verfahren zum Vermischen der Komponente A mit der Komponente B.

In der Medizin werden seit Jahrzehnten Polymethylmethacrylat-Knochenzemente (PMMA-Knochenzemente) zur dauerhaften mechanischen Fixierung von Totalgelenkendoprothesen eingesetzt. Diese basieren auf Pulver-Flüssigkeits-Systemen, wobei Methylmethacrylat üblicherweise als Monomer verwendet wird. Es wurden in jüngster Zeit auch Polymethylmethacrylat-Knochenzemente vorgeschlagen, die auf der Verwendung von Zementpasten beruhen (DE 10 2007 050 762 B3, DE 10 2008 030 312 A1, DE 10 2007 052 116 A1). Bei diesen Knochenzementen werden zwei Zementpasten separat in geeigneten Kartuschen gelagert. Diese enthalten jeweils neben mindestens einem Monomer und geeigneten Polymeren Bestandteile eines Redoxinitiatorsystems.

Das am häufigsten in Polymethylmethacrylat-Knochenzementen verwendete Monomer ist Methylmethacrylat. Redoxinitiatorsysteme bestehen üblicherweise aus Peroxiden, Beschleunigern sowie gegebenenfalls geeigneten Reduktionsmitteln. Eine Radikalbildung erfolgt nur dann, wenn alle Komponenten der Redoxinitiatorsysteme zusammenwirken. Deshalb werden die Komponenten des Redoxinitiatorsystems in den separaten Zementpasten so angeordnet, dass diese keine radikalische Polymerisation auslösen können. Die Zementpasten sind lagerstabil. Erst bei Vermischung der beiden Zementpasten zu einem Zementteig reagieren die zuvor getrennt in beiden Pasten gelagerten Komponenten des Redoxinitiatorsystems, wobei Radikale gebildet werden, welche die radikalische Polymerisation des wenigstens einen Monomers auslösen. Die radikalische Polymerisation führt dann unter Verbrauch des Monomers zu Bildung von Polymeren, wobei der Zementteig aushärtet. Zur Vermischung der Zementpasten werden üblicherweise statische Mischer eingesetzt, die dazu an den 2-Komponentenkartuschen angebracht werden.

Beim Auspressen der beiden Zementpasten aus den Kartuschen werden die beiden Zementpasten durch einen statischen Mischer gedrückt. Der Auspress- und der Vermischungsvorgang erfolgen dadurch gleichzeitig. Zur Vermischung der Zementpasten im statischen Mischer ist eine hohe Auspresskraft notwendig, weil der Druckabfall innerhalb des statischen Mischers an den Mischelementen sehr hoch ist. Dadurch ist es notwendig, leistungsfähige pneumatische oder mechanische Auspressvorrichtungen einzusetzen, um einen Austrag und eine Vermischung der Zementpasten zu erreichen. Diese pneumatischen oder auch mechanischen Auspressvorrichtungen sind technisch aufwendig und teuer. Kostengünstig sind dagegen die, bisher bei den auf Pulver-Flüssigkeits-Systemen beruhenden Polymethylmethacrylat-Knochenzementen üblichen, manuell betriebenen Auspresspistolen, welche sich für diese Zemente eignen, jedoch für die Auspressung und Vermischung von Knochenzementpasten unter Verwendung von statischen Mischern nicht ausreichend leistungsfähig sind.

Aus der WO 2011/083095 A1 ist eine Mischvorrichtung für Knochenzement bekannt, bei dem ein Vakuum in einem Mischraum erzeugbar ist, indem ein Kolben in einem Zylinder bewegt wird. Die WO 2012/174670 A1 offenbart eine Vorrichtung zum blasenarmen Mischen eines Produkts, wobei mit einem Kolben, der mit einer Feder gelagert ist, Luft aus dem Innenraum herausgepresst werden kann. Die DE 102 42 984 A1 schlägt eine Vorrichtung zum Mischen von zwei Komponenten aus zwei Behältern vor, bei dem die Behälter durch eine Dichtlippe voneinander getrennt sind. Eine Misch-Vorrichtung mit zwei Behältern ist aus der US 2010/046315 A1 bekannt, wobei einer der Behälter durch eine Öffnungsvorrichtung zu öffnen ist, so dass die Inhalte der Behälter in dem anderen Behälter durchmischbar sind.

Bei konventionellen Zweikomponentenkartuschen ist das Volumenverhältnis der Komponenten A zur Komponente B 1:1, 1:2 und 1:10. Je ungleicher die Volumina der mit statischen Mischern zu vermischenden Komponenten sind, umso schwieriger ist es eine homogen gemischte Knochenzement-Paste zu erzeugen. Deshalb sind sehr viele Mischwendeln bei größeren Volumenverhältnissen notwendig. Je größer die Anzahl der benötigten Mischwendeln ist, umso größer ist auch der Druckabfall im statischen Mischer beim Mischprozess. Es muss eine pastenförmige Komponente A vorhanden sein, die zweite Komponente B kann flüssig oder pulverförmig oder ebenfalls pastenförmig sein.

In der Klebstoff- und Dichtungsmittelindustrie hat sich seit Jahren das System Semkit^{®} bewährt. Dabei wird in einem Lagerbehälter eine Paste gelagert. In einem Rührstab ist eine zweite flüssige Komponente enthalten, die durch ein im Rührstab integriertes Ventil von der Paste getrennt ist. Bei Betätigen des Ventils läuft die Flüssigkeit in die Paste, die dann manuell gemischt werden kann.

Nachteilig ist jedoch an einem solchen System, dass das Ventilsystem nur für zähflüssige Medien geeignet ist. Das in pastenförmigen Polymethylmethacrylat-Knochenzementen übliche Monomer Methylmethacrylat kann mit diesem Ventil nicht dauerhaft von der Paste getrennt werden. Weiterhin werden bei diesem System Volumenschwankungen, die bei der axialen Mischbewegung des Rührstabes in nicht kompressiblen Pasten auftreten, dadurch ausgeglichen, dass einerseits die Kartuschen weich sind und dass anderseits die Durchführung für den Rührstab nicht vollständig dicht ist, so dass gemischte Paste austreten kann und auch Luft in geringem Umfang in die gemischte Paste gezogen werden kann. Für pastenförmige Knochenzemente sind formstabile, feste Kartuschen notwendig, weil der sehr zähe pastenförmige Polymethylmethacrylat-Knochenzement nur mit großen Auspresskräften aus Lagerbehältern ausgepresst werden kann. Weiterhin ist es für Knochenzemente nicht möglich, ein Mischsystem zu verwenden, bei dem ein unerwünschter Austritt geringer Pastenmengen auftritt und bei dem die Möglichkeit besteht, dass Luft in die Paste gezogen wird. Dadurch würde einerseits die Sauberkeit im OP beeinträchtigt und andererseits wird durch Eintrag von Luft der Zementteig mechanisch geschwächt, weil Luftblasen im ausgehärteten Zement als Rissansatzstellen wirken und damit die Festigkeit des ausgehärteten Knochenzements herabsetzen. Dadurch kann das Semkit^{®}-System nicht für pastenförmige Polymethylmethacrylat-Knochenzemente eingesetzt werden.

Die Aufgabe der Erfindung besteht also darin, die Nachteile des Stands der Technik zu überwinden. Insbesondere soll eine kostengünstige Vorrichtung zur Lagerung und Vermischung von Polymethylmethacrylat-Knochenzement entwickelt werden, mit der Polymethylmethacrylat-Knochenzementkomponenten unter Luftausschluss gelagert werden können, wobei nach Vermischung der Zementkomponenten ein Austragen des Zementteigs mit üblichen, preiswerten, manuell betriebenen Zementierpistolen möglich sein soll. Es darf beim Vermischen nicht zum ungewollten Austritt von Zementteig und auch nicht zum Ansaugen von Luft in den Zementteig infolge von Volumenschwankungen beim Mischvorgang kommen. Die Vorrichtung soll auch geeignet sein, bei einem Volumenverhältnis der Pasten von 1:10 bis 1:50 eine sichere Vermischung der beiden Pasten zu gewährleisten, damit ein homogener Zementteig erhalten wird. Weiterhin soll ein Verfahren zum Vermischen von pastenförmigen Polymethylmethacrylat-Knochenzementen unter Verwendung der zu entwickelnden Vorrichtung bereitgestellt werden. Die Hauptkomponente des Knochenzements muss pastenförmig sein.

Die Aufgaben der Erfindung werden gelöst durch eine Vorrichtung zur Lagerung, Vermischung und Applikation von Polymethylmethacrylat-Knochenzement (PMMA-Knochenzement) aufweisend einen ersten Behälter für eine erste pastenförmige Komponente des Knochenzements, einen im ersten Behälter verschiebbar angeordneten Austragskolben zum Auspressen des Inhalts des ersten Behälters durch eine Austragsöffnung, eine Mischeinrichtung zum Durchmischen des Inhalts des ersten Behälters, wobei die Mischeinrichtung im ersten Behälter angeordnet ist und die Mischeinrichtung von außen im ersten Behälter zum Durchmischen bewegbar ist, und zumindest ein zweiter Behälter für zumindest eine zweite Komponente des Knochenzements in oder an dem ersten Behälter angeordnet ist, wobei der zweite Behälter zu öffnen ist, so dass die Inhalte des ersten Behälters und des zweiten Behälters sich im ersten Behälter miteinander vermischen lassen, wobei zumindest eine Begrenzungsfläche des ersten Behälters durch ein durch das Hineinschieben eines mit der Mischeinrichtung verbundenen Stabs oder Rohrs in den ersten Behälter und Herausziehen des Stabs oder Rohrs aus dem ersten Behälter und/oder
durch Eintrag der zweiten Komponente in den ersten Behälter bewegliches Volumenausgleichselement gebildet ist.

Ein Volumenausgleichselement kann bevorzugt durch einen oder zwei axial im ersten Behälter bewegliche Zylinder realisiert sein. Alternativ oder zusätzlich kann ein Volumenausgleichselement auch durch eine flexible verformbare Haut oder Membran gebildet sein.

Bei erfindungsgemäßen Vorrichtungen kann vorgesehen sein, dass der Austragskolben gegen den ersten Behälter arretierbar ist oder arretiert ist, bevorzugt an dem der Austragsöffnung gegenüber liegenden Ende des ersten Behälters.

Mit der Arretierung kann der Austragskolben beim Entgasen und Sterilisieren des ersten Behälters gehalten werden.

Mit einer bevorzugten Ausgestaltung der Erfindung wird vorgeschlagen, dass die Mischeinrichtung mit der Stange oder dem Rohr verbunden ist, wobei die Stange oder das Rohr über eine gasdichte Durchführung durch eine Begrenzung des ersten Behälters hindurch axial beweglich ist, so dass die Mischeinrichtung durch eine Bewegung der Stange oder des Rohrs zum Durchmischen des Inhalts des ersten Behälters bewegbar ist, wobei bevorzugt die Stange oder das Rohr axial drehbar gelagert ist.

Die Mischeinrichtung kann über eine Mehrzahl von Mischflügeln realisiert werden. Es ist auch vorstellbar, dass die Mischeinrichtung über eine Stange oder ein Rohr bedienbar ist und zusätzlich über einen separaten oder integrierten Magnetrührkern verfügt.

Hierdurch kann auf einfach Weise eine manuelle Durchmischung des Inhalts erfolgen.

Es kann des Weiteren vorgesehen sein, dass die Austragsöffnung verschlossen ist und vor der Applikation des gemischten Knochenzements zu öffnen ist, wobei bevorzugt die Austragsöffnung ein Austragsrohr ist und die Austragsöffnung gegenüber liegend vom Austragskolben angeordnet ist.

Bevorzugt kann vorgesehen sein, dass das Austragsrohr und/oder der Verschluss des Austragsrohrs fest mit der Mischeinrichtung verbunden ist oder sind, so dass die Mischeinrichtung über das Austragsrohr und/oder den Verschluss in dem ersten Behälter beweglich ist. Besonders bevorzugt kann dabei ein Griffstück zum manuellen Bewegen der Mischeinrichtung am Austragsrohr und/oder dem Verschluss vorgesehen sein.

Hierdurch wird der Eintrag von Luft vermieden. Zudem bleibt so der Inhalt der Behälter steril.

Bevorzugt kann vorgesehen sein, dass der erste Behälter einen zylindrischen Innenraum aufweist und der Austragskolben in dem Innenraum des ersten Behälters eine Passform entsprechend der Grundfläche des zylindrischen Innenraums aufweist.

Unter einem zylindrischen Innenraum wird erfindungsgemäß ein gerader Zylinder mit beliebiger Grundfläche, das heißt auch mit nicht kreisförmiger oder runder Grundfläche verstanden. Erfindungsgemäß wird aber ein zylindrischer Innenraum mit kreisrunder Grundfläche bevorzugt. Der Austragskolben ist dann ebenfalls zylindrisch und liegt über eine Dichtung an den Wandungen des zylindrischen Innenraums des ersten Behälters an. Bevorzugt ist an der dem Innenraum zugewandten Seite des Austragskolbens ein Abstreifer angeordnet, mit dem verhindert wird, dass die gemischte Knochenzementpaste beim Vortreiben des Austragskolbens am Austragskolben vorbei gedrückt wird und auf der Rückseite der Vorrichtung austreten kann. Die Mischeinrichtung hat, bei der bevorzugten kreisrunden Zylindergeometrie des ersten Behälters, Mischflügel, die gleich oder bevorzugt etwas kleiner als der Innendurchmesser des zylindrischen Innenraums sind.

Die zylindrische Geometrie mit kreisrunder Grundfläche ist die einfachste zum Zweck des Aufbaus. Es ist besonders bevorzugt, wenn auch die Außenfläche des ersten Behälters entsprechend zylindrisch ist und zu wenigstens 90% die Wandung des Behälters über eine gleichmäßige Dicke verfügt.

Mit einer bevorzugten Weiterentwicklung der Erfindung kann vorgesehen sein, dass der zweite Behälter eine durchstechbare Membran als Begrenzung aufweist und in dem ersten Behälter ein Dorn angeordnet ist, der derart gegen die Membran beweglich gelagert ist, so dass der Dorn die Membran durchstößt und damit den zweiten Behälter öffnet, so dass der Inhalt des zweiten Behälters mit dem Inhalt des ersten Behälters mischbar ist.

Durch diesen Aufbau kann der zweite Behälter innerhalb des ersten Behälters oder an dessen Rand leicht mechanisch geöffnet werden, ohne dass er hierzu von außen direkt zugänglich sein müsste. Der Öffnungsmechanismus ist dazu innerhalb des Aufbaus angeordnet. Zudem wird eine mögliche Kontamination oder ein Lufteintrag beim Öffnen verhindert.

Alternativ zu der Membran kann auch vorgesehen sein, dass der zweite Behälter einen Pfropfen als Begrenzungsfläche aufweist, an dem ein Rastmittel angeordnet ist, und der zweite Behälter mit dem Rastmittel auf ein Gegenrastmittel im ersten Behälter drückbar ist, so dass das Rastmittel mit dem Gegenrastmittel rastet. Anschließend kann der Pfropfen gelöst werden, indem der zweite Behälter wieder zurückgezogen wird. Bevorzugt ist der zweite Behälter in einem Austragsrohr angeordnet, das axial durch eine Durchführung in einer Begrenzungsfläche des ersten Behälters in den ersten Behälter einschiebbar und herausziehbar ist, wobei der Pfropfen das dem ersten Behälter zugewandte Ende des Austragsrohrs verschließt. Besonders bevorzugt kann dabei vorgesehen wenn das Gegenrastmittel am Austragskolben angeordnet ist.

Dabei kann zusätzlich vorgesehen sein, dass die Austragsöffnung in einem Austragsrohr angeordnet ist, der Dorn am Austragskolben angeordnet ist und der zweite Behälter durch Bereiche der Innenwände des Austragsrohrs, einen zu öffnenden Verschluss des Austragsrohrs und die Membran begrenzt ist, wobei das Austragsrohr axial beweglich in einer Durchführung durch eine Begrenzung des ersten Behälters gelagert ist, so dass das Austragsrohr mit der Membran auf den Dorn drückbar ist.

Die Verwendung des Austragsrohrs als zweiten Behälter ist platzsparend und spart auch ein zusätzliches bewegliches Teil im Inneren des ersten Behälters. Bei dieser Ausführung reicht eine einzige Durchführung aus, mit der sowohl der zweite Behälter gegen den ersten Behälter geöffnet werden kann, als auch die Mischeinrichtung bedient werden kann.

Gemäß einer bevorzugten Ausführung der Erfindung kann vorgesehen sein, dass zumindest ein Volumenausgleichselement axial beweglich in dem ersten Behälter angeordnet ist, wobei bevorzugt das zumindest eine Volumenausgleichselement eine gasdichte Durchführung aufweist, durch die ein Stab oder Rohr zum Bedienen der Mischeinrichtung hindurchgeführt ist, besonders bevorzugt das Austragsrohr zum Bedienen der Mischeinrichtung hindurchgeführt ist.

Der Aufbau hierzu ist einfach umsetzbar und dadurch kostengünstig zu realisieren.

Gemäß einer weiteren Vereinfachung der Erfindung kann vorgesehen sein, dass ein Volumenausgleichselement durch den Austragskolben realisiert ist und die Bewegung des Austragskolbens aus dem ersten Behälter heraus durch ein Begrenzungselement begrenzt ist, wobei das Begrenzungselement bevorzugt eine Rastung ist, die in eine Gegenrastung am Austragskolben greift.

Alternativ kann das Begrenzungselement auch durch eine Überwurfmutter gebildet sein.

Die Verwendung des Austragskolbens als Volumenausgleichselement ist deshalb besonders einfach, da der Austragskolben ohnehin beweglich innerhalb des ersten Behälters beziehungsweise genauer innerhalb der Wandungen des bevorzugt zylindrischen Kunststoffkörpers sein soll. Damit kann dieser auch für den Volumenausgleich verwendet werden und es ist kein weiteres bewegliches Volumenausgleichselement mehr notwendig.

Bevorzugt kann vorgesehen sein, dass ein Volumenausgleichselement gegenüber dem Austragskolben in dem ersten Behälter als beweglich gelagertes zylindrisches Volumenausgleichselement angeordnet ist, wobei bevorzugt das Volumenausgleichselement eine gasdichte Durchführung für ein Rohr oder einen Stab aufweist, das oder der beweglich in der Durchführung gelagert ist.

Es können auch beide genannten Volumenausgleichselemente gleichzeitig verwirklich sein durch ein erstes Volumenausgleichselement, das durch den Austragskolben realisiert ist, und durch ein zweites Volumenausgleichselement, das gegenüber dem Austragskolben in dem ersten Behälter als beweglich gelagertes zylindrisches Volumenausgleichselement angeordnet ist. Zusätzlich könnte theoretisch auch eine verformbare Membran vorgesehen sein, die ebenfalls eine Volumenänderung des ersten Behälters durch Bedienen der Mischeinrichtung aufnehmen kann. Zur Vereinfachung des Aufbaus ist jedoch die Beschränkung auf ein einziges Volumenausgleichselement bevorzugt.

Das gegenüber zum Austragskolben angeordnete Volumenausgleichselement hat den Vorteil, dass es bezüglich seiner Beweglichkeit voll auf die Anforderungen eines Volumenausgleichselements abgestimmt werden kann.

Ferner kann vorgesehen sein, dass ein Kern als Verschluss der Austragöffnung vorgesehen ist, der aus der Austragsöffnung, insbesondere dem Austragsrohr herausnehmbar ist, wobei bevorzugt der Kern eine Aufnahme für den Dorn aufweist, besonders bevorzugt eine zu dem Dorn passende Aufnahme.

Durch die passende Form des Kerns zu dem Dorn kann der gesamte Inhalt aus dem zweiten Behälter herausgepresst werden, wenn die Aufnahme die Rückwand des zweiten Behälters bildet.

Dabei kann vorgesehen sein, dass der Kern an der dem ersten Behälter zugewandten Seite einen Abstreifer aufweist, der beim Herausziehen des Kerns Pulver oder Zementteig an der Innenseite der Austragsöffnung, insbesondere des Austragsrohrs abstreift.

Hierdurch kann vermieden werden, dass Rückstände im Rohr zurückbleiben, die beim Austragen gelöst werden und die dadurch die Eigenschaften des Knochenzements beeinflussen könnten. Dadurch kann sichergestellt werden, dass der frühzeitig ausgetragene Knochenzement die gleichen Eigenschaften hat wie der später ausgetragene.

Des Weiteren kann vorgesehen sein, dass zumindest ein Volumenausgleichselement über eine elastische Feder gegen den ersten Behälter beweglich gelagert ist, wobei die Feder das Volumenausgleichselement in den Innenraum des ersten Behälters drückt.

Die Feder unterstützt die Rückbewegung des Volumenausgleichselements. Dadurch wird die durch die ebenfalls treibenden hydraulischen Kräfte durch den Knochenzementteig beziehungsweise dessen Komponenten verursachten und übertragenen Kräfte auf die Dichtungen und die beweglichen Teile der Vorrichtung reduziert, so dass ein kostengünstigerer Aufbau mit weniger Materialstärke und geringeren Anpressdrucken realisiert werden kann.

Gemäß einer bevorzugten Weiterbildung der Erfindung kann auch vorgesehen sein, dass die Seite mit dem Austragsrohr von einer Verschlusskappe verschlossen ist, die eine Durchführung für das Austragsrohr aufweist, die ein Volumenausgleichselement abdeckt und die zumindest eine Öffnung zum Ermöglichen eines Druckausgleichs zwischen der Umgebung und dem Zwischenraum zwischen der Verschlusskappe und dem abgedeckten Volumenausgleichselement aufweist, wobei bevorzugt eine elastische Spiralfeder zum Drücken des Volumenausgleichselements in den Innenraum des ersten Behälters zwischen der Verschlusskappe und dem abgedeckten Volumenausgleichselement angeordnet ist, wobei besonders bevorzugt die Spiralfeder um das Austragsrohr herum angeordnet ist.

Durch diese Maßnahme kann eine Beeinträchtigung der Beweglichkeit durch äußere Einflüsse (wie beispielsweise Druck oder Blockade des Volumenausgleichselements) vermieden werden.

Die der Erfindung zugrundeliegenden Aufgaben werden auch gelöst durch ein Verfahren zum Herstellen eines Polymethylmethacrylat-Knochenzements mit einer solchen Vorrichtung, gekennzeichnet durch die Schritte:
A) Bereitstellen der Vorrichtung, wobei der erste Behälter mit einer ersten pastenförmigen Komponente des PMMA-Knochenzements gefüllt ist und der zweite Behälter mit einer zweiten, vorzugsweise flüssigen Komponente des PMMA-Knochenzements gefüllt ist;
B) Öffnen des zweiten Behälters;
C) Mischen der beiden Komponenten durch Bewegen der Mischeinrichtung, wobei beim Bewegen der Mischeinrichtung ein mit der Mischeinrichtung verbundener Stab oder verbundenes Rohr in den ersten Behälter wiederholt hinein geschoben und heraus gezogen wird, wobei die Volumenveränderung des Inhalts des ersten Behälters durch das Hineinschieben und Herausziehen durch eine Bewegung des zumindest einen Volumenausgleichselements ausgeglichen wird; und
D) Applizieren des gemischten Knochenzements durch Vortreiben des Austragskolbens in dem ersten Behälter.

Dabei kann vorgesehen sein, dass die Austragsöffnung zunächst durch einen Kern verschlossen ist und nach Schritt C) der Kern entfernt wird.

Der Kern dichtet die Vorrichtung nach außen ab.

Ferner kann vorgesehen sein, dass zum Öffnen des zweiten Behälters ein Austragsrohr, das den zweiten Behälter enthält, auf einen Dorn am Austragskolben gedrückt wird und dadurch eine Membran oder eine Folie, die den zweiten Behälter abschließt, durchstochen wird und dadurch der zweite Behälter geöffnet wird. Dies hat die oben genannten Vorteile.

Des Weiteren kann vorgesehen sein, dass die Mischeinrichtung mit dem Austragsrohr verbunden ist und der Inhalt des ersten Behälters gemischt wird, indem die Mischeinrichtung durch hineinbewegen und herausbewegen des Austragsrohrs in den ersten Behälter die Mischeinrichtung in dem ersten Behälter bewegt wird, wobei bevorzugt zusätzlich die Mischeinrichtung durch Drehen des Austragsrohrs im ersten Behälter gedreht wird.

Hierdurch ist eine einfache Durchmischung der Komponenten auch unter widrigen Bedingungen außerhalb eines ordentlichen OP-Saals leicht möglich.

Ferner kann vorgesehen sein, dass vor Schritt A) der erste Behälter mit einer Komponente des Knochenzements gefüllt wird und das Innere des ersten Behälters zuvor entgast und sterilisiert wird, wobei dazu bevorzugt der Austragskolben arretiert wird.

Hierdurch wird sichergestellt, dass der Inhalt steril ist. Dadurch können Infektionen beim Patienten vermieden werden.

Der Erfindung liegt die überraschende Erkenntnis zugrunde, dass es durch die Verwendung zumindest eines beweglichen Volumenausgleichselements gelingt, eine gasdichte Vorrichtung zum Mischen von PMMA-Knochenzement bereitzustellen, bei der auch kein Knochenzement durch die beim Mischen auftretenden Volumenänderungen aus der Vorrichtung austreten kann. Hierdurch wird es möglich einen sehr einfachen und kostengünstigen Aufbau zum Mischen von Knochenzement zu realisieren, bei dem keine Gefahr durch Kontamination der Umgebung mit dem Knochenzement besteht und bei dem auch keine Gefahr besteht, dass beim Mischen Luft oder Gas in den Knochenzement eingemischt wird, der nach dem Aushärten zu einer Schwächung des Knochenzements führt.

Durch die Nutzung eines Austragsrohrs als Betätigungseinrichtung für die Mischeinrichtung sowie durch die Nutzung des Austragsrohrs als Behälter für die zweite Komponente des Knochenzements, kann auf zusätzliche Bauteile verzichtet werden. Hierdurch wird eine weitere Kostenreduktion erreicht.

Es ist erfindungswesentlich, dass in dem ersten Behälter eine Paste als erste Komponente enthalten ist. Ferner dürfen keine Luft und keine Gaseinschlüsse in der Paste enthalten sein und es darf auch keine Gasphase in dem ersten Behälter überstehen. Jeder Gaseinschluss kann zu einer Verminderung der Qualität des erzeugten Knochenzements führen. Durch die inkompressible Paste und das Fehlen von kompressiblen Gasvolumina ist der Inhalt des ersten Behälters dadurch völlig inkompressibel. Die Durchmischung durch Einschieben und Herausziehen einer Stange oder eines Rohrs, an der oder dem die Mischeinrichtung befestigt ist, ist dann erfindungsgemäß nur mit dem Volumenausgleichselement möglich. Da der erste Behälter über starre Wandungen verfügt, könnte ansonsten kein Einschieben oder Herausziehen der Stange oder des Rohrs erfolgen.

Die Grundidee der Erfindung basiert somit darauf, im Gegensatz zu der bei pastenförmigen Zwei-Komponenten-Polymethylmethacrylat-Knochenzementen üblichen zeitgleichen Kombination des Auspress- und des Vermischungsvorgangs unter Verwendung von statischen Mischern, den Auspress- und Vermischungsvorgang zeitlich und räumlich zu trennen. Das bedeutet, dass erst die pastenförmigen Komponenten miteinander vermischt werden und erst danach der gebildete Zementteig ausgepresst wird. Die Vermischung erfolgt dabei durch einen manuell zu betätigenden Mischer. Dadurch ist die zum Austragen erforderliche Auspresskraft niedrig und manuell betriebene, kostengünstige Zementierpistolen können zum Auspressen des Zementteigs verwendet werden. Weiterhin ist es dadurch möglich, auch bei einem Volumenverhältnis der Pasten von 1:10 bis 1:30 eine gleichmäßige Vermischung der Pasten zu erreichen. Wesentlich für die Erfindung ist die Anordnung eines beweglichen Volumenausgleichselements mit dem Volumenschwankungen während des Mischprozesses ausgeglichen werden können, ohne das Zementteig austritt und ohne das Luft in den Zementteig gezogen wird.

Eine beispielhafte und erfindungsgemäß besonders bevorzugte Vorrichtung zur Lagerung, Vermischung und Applikation von Polymethylmethacrylat-Knochenzement ist zusammengesetzt aus
a) einem zylinderförmigen Lagerbehälter mit einem ersten Raum (Behälter) für eine pastenförmige Komponente A,
b) einem verschiebbaren Austragskolben, der an einem Ende des zylinderförmigen Lagerbehälters arretiert werden kann,
c) einem an der Innenseite des Austragskolbens angeordneten Dorn,
d) einem Austragsrohr,
e) einem axial im Lagerbehälter beweglichen Volumenausgleichselement, das eine Durchführung für ein axial verschiebbares Austragsrohr besitzt,
f) einem ersten Verschluss des Lagerbehälters an dem zum Austragskolben gegenüber liegenden Ende des Lagerbehälters,
g) einer Durchführung des ersten Verschlusses für ein axial zum Lagerbehälter verschiebbares Austragsrohrs,
h) einer Mischeinrichtung, die am Ende des Austragsrohrs angebracht ist und in dem zwischen dem Volumenausgleichselement und dem Austragskolben gebildeten Raum angeordnet ist,
i) einem durch den Dorn zu öffnenden zweiten Verschluss des Austragsrohrs, wobei der zweite Verschluss an dem Ende des Austragsrohrs angeordnet ist, an dem sich der Mischer befindet,
j) einem in dem Austragsrohr axial beweglich angeordneten Kern, und
k) einem zweiten Raum (Behälter) für eine Komponente B, der vom Austragsrohr, vom Verschluss des Austragsrohrs und dem in Richtung des Inneren zeigenden Ende des beweglichen Kerns gebildet wird.

Die Vorrichtung besteht bevorzugt im Wesentlichen aus in der Medizin üblichen thermoplastischen Kunstoffen, wie Polypropylen, Polyethylen, Polyamid oder sonstigen medizinisch geeigneten Kunststoffen.

Das Austragsrohr mit daran angeordnetem Mischer und der Kern basieren auf einem im EP 2 072 114 B1 beschriebenen Zementiersystem, dass unter der Bezeichnung Palamix von der Firma Heraeus Medical GmbH (Wehrheim) hergestellt und vertrieben wird.

Der zweite Verschluss am Austragsrohr ist bevorzugt als Membran gebildet. Die Membran wird vorteilhaft zusammen mit dem Austragsrohr und dem Mischer als ein Stück aus Kunststoff gespritzt. Dadurch ist der zweite Raum sicher zum ersten Raum hin abgeschlossen und die Paste A und das darin enthaltene Monomer Methylmethacrylat können nicht in den zweiten Raum zur Komponente B vordringen. Die Membran hat besonders bevorzugt eine Dicke von 10 µm bis 500 µm.

Der Dorn ist bevorzugt sternförmig oder prismenförmig ausgebildet. Dadurch kann die Membran problemlos so radial vom Mittelpunkt aufgeschnitten werden, dass einerseits die Komponente B in den ersten Raum zur Paste A gepresst werden kann und dass andererseits die Membranstücke an einer Seite noch mit dem Austragsrohr verbunden bleiben, so dass diese nach erfolgter Vermischung der Paste A mit der Komponente B beim Austragen durch das Austragsrohr nicht in den Zementteig gelangen können.

Erfindungsgemäß kann auch vorgesehen sein, dass der Kern an seinem dem zweiten Verschluss zugewandtem Ende einen Hohlraum besitzt, der den Dorn aufnehmen kann. Das bedeutet, dass der Kern bündig mit dem Austragsrohr und dem daran angeordneten Mischer so abschließen kann, dass der Mischer problemlos die Innenseite des Austragskolbens während des Vermischens der Paste A mit der Komponente B abkratzen kann. Dadurch werden Inhomogenitäten des Zementteigs vermieden.

Die pastenförmige Komponente A soll luftfrei im Lagerbehälter gelagert werden. Das bedeutet, es darf keine Gasphase über der pastenförmigen Komponente A stehen. Dadurch gibt es kein kompressibles Medium, dass beim Eintrag der Komponente B und bei dem durch den Mischvorgang durch Eintauchen und Herausziehen des Mischers auftretenden Volumenzunahmen und Volumenabnahmen kompensieren kann. Es muss unbedingt vermieden werden, dass beim Mischprozess Paste heraustritt beziehungsweise, dass Luft in die Paste gesaugt wird.

Wesentlich für die Erfindung ist daher, dass das ein Volumenausgleichselement realisiert wird, das bevorzugt durch einen axial im Lagerbehälter beweglichen Kolben gebildet wird, welcher eine Ausnehmung zur Durchführung des Austragsrohrs besitzt. Das als beweglicher Kolben ausgebildete Volumenausgleichselement kann durch axiale Bewegung in Richtung des Verschlusses die Volumenzunahme zwischen dem Austragskolben und dem Volumenausgleichselement durch Eintrag der Komponente B in die Paste A und auch den Volumeneintrag durch Bewegung des Austragsrohrs in Richtung des Austragskolbens ausgleichen. Bei der Bewegung des Austragsrohrs in Richtung des Verschlusses wird das sich verringernde Volumen zwischen dem Austragskolben und dem Ausgleichselement durch Bewegung des Volumenausgleichselements in Richtung des Austragskolbens kompensiert. Dadurch ist ein Mischen möglich, ohne dass Luft bei der Volumenzunahme eintritt und ohne dass Zementpaste während der temporären Volumenzunahme infolge der dabei auftretenden Druckerhöhung austreten kann.

Es kann erfindungsgemäß vorgesehen sein, dass das Volumenausgleichselement während der Befüllung des Lagerbehälters durch eine Splint gegen Verschiebung gesichert ist, der nach der Befüllung oder vor der Vermischung der pastenförmigen Komponente A mit der Komponente B entfernt wird.

In einer weiteren Ausführungsform der Erfindung wird das Volumenausgleichselement durch eine axial deformierbare Membran gebildet, welche eine Ausnehmung zur Durchführung des Austragsrohrs besitzt.

Für die Funktion des Volumenausgleichselements ist es wesentlich, dass das Volumenausgleichselement mit einer Feder, die sich am ersten Verschluss abstützt, vom ersten Verschluss beabstandet wird, wobei hierzu eine Spiralfeder bevorzugt wird, die um das Austragsrohr geführt ist. Die Feder dient dazu, das Volumenausgleichselement nach einer temporären Volumenzunahme und damit einer Bewegung des Volumenausgleichselements in Richtung Verschluss wieder in die Ausgangslage zurück zu führen. Das bedeutet, dass kein Unterdruck im ersten Raum notwendig ist, damit die Ausgangsposition des Volumenausgleichselements wieder erreicht wird.

Für die Funktion der Vorrichtung kann es bevorzugt vorgesehen sein, dass der Kern an seiner dem zweiten Verschluss zugewandten Seite einen Abstreifer hat, der pulverförmige Feststoffe und auch pastenförmige Stoffe der Komponente B an der Innenseite des Austragsrohrs abstreift.

Die Erfindung wird auch durch ein Verfahren zum Vermischen von Polymethylmethacrylat-Knochenzement mit der erfindungsgemäßen Vorrichtung realisiert. In der erfindungsgemäßen Vorrichtung befindet sich eine Zementpaste A im ersten Raum und eine durch die Membran separierte Komponente B im zweiten Raum.

Das Verfahren kann beispielsweise dadurch realisiert werden, dass
a) das Austragsrohr in Richtung des Austragskolbens bewegt wird, wobei der zweite Verschluss auf den Dorn auftrifft und durch Einwirkung des Dorns der zweite Raum geöffnet wird, in der die Komponente B gelagert wird,
b) anschließend der Kern axial in Richtung des zweiten Verschlusses des Austragsrohrs bewegt wird, wobei die Komponente B aus dem zweiten Raum in die Paste A gedrückt wird, die sich im ersten Raum, der vom Lagerbehälter, dem ersten Verschluss und dem Volumenausgleichselement begrenzt wird, befindet,
c) anschließend durch axiale und tangentiale Bewegung des Austragsrohrs mit dem Mischer die Komponente B mit der Paste A zum Zementteig C vermischt wird,
d) nach erfolgter Vermischung das Austragsrohr in Richtung des Verschlusses bewegt wird, so dass der Mischer an der Innenseite des Volumenausgleichselements anliegt,
e) anschließend der Kern aus dem Austragsrohr herausgezogen wird, und dass dann der Austragskolben in Richtung des ersten Verschlusses bewegt wird, wobei der Zementteig C aus dem ersten Raum durch das Austragsrohr in die Umgebung ausgepresst wird, und dass bei den Schritten a) bis c), die Volumenänderungen des ersten Raums durch axiale Bewegungen des Volumenausgleichselements ausgeglichen werden.

Im Folgenden werden weitere Ausführungsbeispiele der Erfindung anhand von zwei schematisch dargestellten Figuren erläutert, ohne jedoch dabei die Erfindung zu beschränken. Dabei zeigt:
Figur 1: eine schematische Querschnittansicht einer erfindungsgemäßen Vorrichtung mit einem Volumenausgleichselement an der Vorderseite (oben); und
Figur 2: eine schematische Querschnittansicht einer weiteren erfindungsgemäßen Vorrichtung bei der ein Austragskolben als Volumenausgleichselement fungiert.

In den Figuren werden für gleiche oder ähnliche Bauteile der Einfachheit halber die gleichen Bezugszeichen verwendet. Geschnittene Flächen sind schraffiert dargestellt.

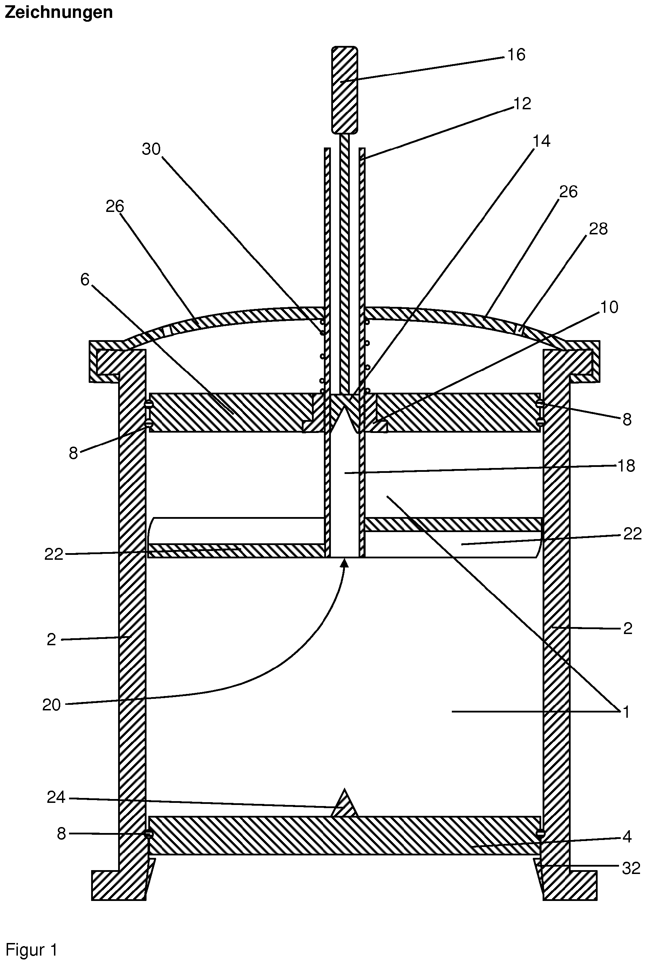

Figur 1 zeigt eine schematische Querschnittansicht einer erfindungsgemäßen Vorrichtung. Die Vorrichtung hat einen ersten Behälter 1 mit zylindrischem Innenraum, der mit einer ersten Komponente eines PMMA-Knochenzements gefüllt ist oder befüllbar ist. Als erste Komponente enthält der erste Behälter 1 eine pastöse Masse, in der das Monomer Methylmethacrylat enthalten ist. Der erste Behälter 1 ist seitlich durch die Wandungen 2 eines zylindrischen Kunststoffkörpers begrenzt. Auf der Rückseite (in Figur 1 unten) ist der erste Behälter 1 durch einen zylindrischen Austragskolben 4 begrenzt. Der erste Behälter 1 ist auf der Vorderseite (in Figur 1 oben) von einem Volumenausgleichselement 6 in Form eines zylindrischen Kolbens begrenzt. Der Austragskolben 4 und der Volumenausgleichskolben 6 sind in Richtung der Zylinderachse (in Figur 1 von oben nach unten) beweglich innerhalb der Wandungen 2 angeordnet und gegen die Wandungen 2 mit Hilfe von O-Ringen als Dichtungen 8 gasdicht abgedichtet.

In dem Volumenausgleichskolben 6 ist eine Durchführung mit einer Führungshülse 10 vorgesehen, durch die sich ein zylindrisches Austragsrohr 12 mit einer Austragsöffnung erstreckt. Das Austragsrohr 12 ist entlang der Zylinderachse und drehbar um die Zylinderachse beweglich in dem Volumenausgleichskolben 6 beziehungsweise der Führungshülse 10 angeordnet. Das Austragsrohr 12 ist in seinem Inneren durch einen herauslösbaren Kern 14 verschlossen. Der Kern 14 ist über eine Stange, die sich durch das Austragsrohr und die Austragsöffnung erstreckt, mit einem Griffstück 16 verbunden. Mit dem Griffstück 16 lässt sich das Austragsrohr 12 durch die Führungshülse 10 und damit das Austragsrohr 12 innerhalb des ersten Behälters 1 bewegen.

Unterhalb des Kerns 14 ist ein zweiter Behälter 18 in dem Austragsrohr 12 angeordnet, der auf der Unterseite (in Figur 1 unten) durch eine Folie 20 oder eine Membran 20 verschlossen. Innerhalb des zweiten Behälters 18 ist eine zweite Komponente des Knochenzements enthalten oder dort einfüllbar. Die zweite Komponente ist beispielsweise eine Flüssigkeit, die zu einem radikalischen Aushärten des Knochenzements führt, wenn sie mit der ersten Komponente (Methylmethacrylat-Teig) gemischt wird. Durch die Membran 20 beziehungsweise die Folie 20 und das Austragsrohr 12 sind die beiden Komponenten zunächst voneinander getrennt.

Außen an dem Austragsrohr 12 sind drei Mischflügel 22 angeordnet, mit denen der Inhalt des ersten Behälters 1 durch Bewegen des Austragsrohrs 12 in der Führungshülse 10 durchmischt werden kann. Die Mischflügel 22 bilden damit eine Mischeinrichtung 22 zum Durchmischen des Inhalts des ersten Behälters 1. Die Mischflügel 22 sind vorliegend nach Art eines Propellers gegenläufig geneigt.

Auf der innenliegenden Deckfläche des Austragskolbens 4 ist ein Dorn 24 zum Durchstoßen der Membran 20 beziehungsweise Folie 20 angeordnet. Der zweite Behälter 18 kann geöffnet werden, indem das Austragsrohr 12 in den ersten Behälter 1 hinein geschoben wird, bis die Membran 20 beziehungsweise die Folie 20 auf den Dorn 24 gedrückt und damit geöffnet wird. Der Dorn 24 kann ein Kegel, eine Pyramide oder eine mehrzähliger Stern mit Kanten als Flanken sein, um eine besonders gutes Aufschneiden oder Aufstechen der Membran 20 beziehungsweise der Folie 20 sicherzustellen.

Wenn das Austragsrohr 12 gemäß einer alternativen Ausführungsform anstelle der Membran 20 mit einem Pfropfen (nicht gezeigt) mit einem Rastmittel ausgestattet ist, ist anstelle des Dorns 24 ein Gegenrastmittel (nicht gezeigt) am Austragskolben 4 vorgesehen, der in das Rastmittel des Pfropfens greift und dann aus dem Austragsrohr 12 herausgezogen werden kann, um den zweiten Behälter 18 zu öffnen.

Die beiden Komponenten sind in den beiden Behältern 1, 18 ohne Lufteinschlüsse enthalten beziehungsweise werden ohne Gas- oder Lufteinschlüsse dort eingebracht. Zudem wird das Innere der Behälter 1, 18 vor dem Befüllen entgast und sterilisiert. Da sich kein Gas im Inneren des ersten Behälters 1 befindet, ist der Inhalt des ersten Behälters 1 inkompressibel. Durch das Einschieben oder Herausziehen des Austragsrohrs 12 verändert sich dann das Volumen des ersten Behälters 1. Der Ausgleich des Volumens kann durch eine axiale Bewegung des Volumenausgleichskolbens 6 und/oder durch eine axiale Bewegung des Austragskolbens 4 erfolgen. Dadurch ist eine Durchmischung des Inhalts des ersten Behälters 1 möglich, ohne dass der Inhalt des ersten Behälters 1 austritt oder Luft in den ersten Behälter 1 eingezogen wird.

Auf der Vorderseite (in Figur 1 oben) ist der äußere zylindrische Kunststoffkörper 2 mit einem Deckel 26 verschlossen. In dem Deckel 26 sind Öffnungen 28 vorgesehen, damit Luft aus dem Zwischenraum zwischen dem Deckel 26 und dem Volumenausgleichskolben 6 entweichen kann. Die Öffnungen 28 können auch weggelassen werden, damit besagter Zwischenraum als Gasfeder fungieren kann. Bevorzugt ist jedoch zwischen dem Deckel 26 und dem Volumenausgleichskolben 6 eine Stahlfeder 30 als Rückstellelement angeordnet. Wenn der Volumenausgleichskolben 6, in Folge eines Einschiebens des Austragsrohrs 12 in der ersten Behälter 1, in Richtung des Deckels 26 gedrückt wird, hilft die Stahlfeder 30 dabei, den Volumenausgleichskolben 6 wieder in Richtung des Austragskolbens 4 zu drücken, wenn das Austragsrohr 12 wieder aus dem ersten Behälter 1 herausgezogen wird.

Der Kern 14 hat in Richtung des zweiten Behälters 18 eine Ausnehmung als Negativform des Dorns 24. Dadurch kann der Dorn 24 in die Ausnehmung aufgenommen werden, wenn der Kern in das Austragsrohr 12 hineingeschoben wird. Dazu sollte die Stange, über die der Kern 14 mit dem Griffstück 16 verbunden ist, lange genug sein (also länger als in der schematischen Figur 1 dargestellt). Dadurch kann sichergestellt werden, dass der gesamte Inhalt des zweiten Behälters 18 in den ersten Behälter überführt werden kann. Mit einer Abstreiflippe (nicht gezeigt), die an dem unteren Rand des Kerns 14 vorgesehen ist, kann sichergestellt werden, dass der gesamte Inhalt des zweiten Behälters 18 ohne Rückstände aus dem Austragsrohr 12 entfernt werden kann.

An der Unterseite des Kunststoffkörpers 2 sind Rastelemente 32 angeordnet, mit denen sichergestellt werden kann, dass der Austragskolben 4 nicht nach unten aus dem Kunststoffkörper 2 herausgedrückt werden kann. Beim Einschieben des Austragskolbens 4 werden diese kurzzeitig in die Wandung versenkt. Ein kleiner Vorsprung, der zu einer stärkeren Stauchung der Dichtungen 8 des Austragskolbens 4 führt, ist ebenfalls an der Unterseite der Wandungen 2 vorgesehen.

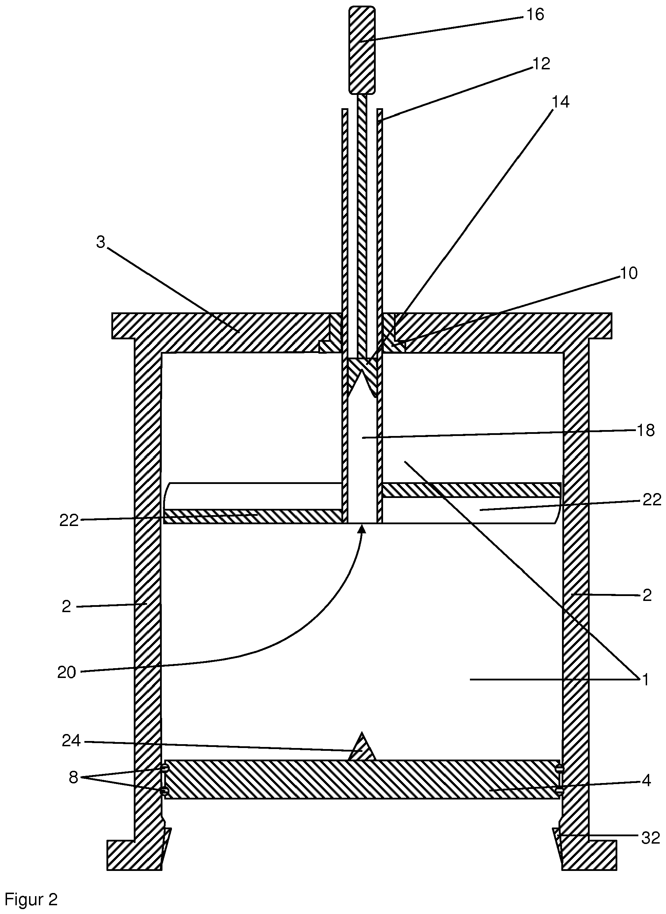

Figur 2 zeigt eine schematische Querschnittansicht einer weiteren erfindungsgemäßen Vorrichtung bei der der Austragskolben 4 alleine als Volumenausgleichselement fungiert. Der Aufbau der Vorrichtung gleicht der nach Figur 1 bis auf einige Details.

Die Vorrichtung nach Figur 2 hat keinen Volumenausgleichskolben und auch keinen Deckel. Stattdessen ist der Kunststoffkörper 2 einfach auf der Vorderseite (in Figur 2 oben) geschlossen und bildet dort eine Deckwand 3. Der Volumenausgleich durch das Einschieben und Herausziehen des Austragsrohrs 12 erfolgt hier ausschließlich durch eine axiale Bewegung des Austragskolbens 4. Auf ein Federelement als Rückstellelement wurde bei dieser Ausführungsform verzichtet.

Der Austragskolben 4 ist vorliegend mit zwei Dichtungen 8 gegen die Wandungen 2 gasdicht abgedichtet. Zu allen anderen Bezugszeichen wird auf die Beschreibung zu Figur 1 verwiesen.

Die Aufbauten nach den Figuren 1 und 2 können einfach und kostengünstig mit Spritzgusstechnik aus Kunststoff gefertigt werden.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1: Erster Behälter
- 2: Wandung
- 3: Deckwand
- 4: Austragskolben
- 6: Volumenausgleichskolben / Volumenausgleichselement
- 8: Dichtung
- 10: Führungshülse
- 12: Austragsrohr
- 14: Kern
- 16: Griffstück
- 18: Zweiter Behälter
- 20: Membran / Folie
- 22: Mischflügel / Mischeinrichtung
- 24: Dorn
- 26: Deckel / Verschluss
- 28: Öffnung
- 30: Stahlfeder
- 32: Rastung

## Patentansprüche

1. Vorrichtung zur Lagerung, Vermischung und Applikation von Polymethylmethacrylat-Knochenzement aufweisend einen ersten Behälter (1) für eine erste pastenförmige Komponente des Knochenzements, einen im ersten Behälter (1) verschiebbar angeordneten Austragskolben (4) zum Auspressen des Inhalts des ersten Behälters (1) durch eine Austragsöffnung, eine Mischeinrichtung (22) zum Durchmischen des Inhalts des ersten Behälters (1), wobei die Mischeinrichtung (22) im ersten Behälter (1) angeordnet ist und die Mischeinrichtung (22) von außen im ersten Behälter (1) zum Durchmischen bewegbar ist, und zumindest ein zweiter Behälter (18) für zumindest eine zweite Komponente des Knochenzements in oder an dem ersten Behälter (1) angeordnet ist, wobei der zweite Behälter (18) zu öffnen ist, so dass die Inhalte des ersten Behälters (1) und des zweiten Behälters (18) sich im ersten Behälter (1) miteinander vermischen lassen, **dadurch gekennzeichnet, dass** zumindest eine Begrenzungsfläche des ersten Behälters (1) durch ein durch das Hineinschieben eines mit der Mischeinrichtung (22) verbundenen Stabs oder Rohrs (12) in den ersten Behälter (1) und Herausziehen des Stabs oder Rohrs (12) aus dem ersten Behälter (1) und/oder
durch Eintrag der zweiten Komponente in den ersten Behälter (1) bewegliches Volumenausgleichselement (4, 6) gebildet ist.

2. Vorrichtung nach Anspruch 1, **dadurch gekennzeichnet, dass**
der Austragskolben (4) gegen den ersten Behälter (1) arretierbar ist oder arretiert ist, bevorzugt an dem der Austragsöffnung gegenüberliegenden Ende des ersten Behälters (1).

3. Vorrichtung nach Anspruch 1 oder 2, **dadurch gekennzeichnet, dass** die Mischeinrichtung (22) mit der Stange oder dem Rohr (12) verbunden ist, wobei die Stange oder das Rohr (12) über eine gasdichte Durchführung durch eine Begrenzung (3, 6) des ersten Behälters (1) hindurch axial beweglich ist, so dass die Mischeinrichtung (22) durch eine Bewegung der Stange oder des Rohrs (12) zum Durchmischen des Inhalts des ersten Behälters (1) bewegbar ist, wobei bevorzugt die Stange oder das Rohr (12) axial drehbar gelagert ist.

4. Vorrichtung nach einem der vorangehenden Ansprüche, **dadurch gekennzeichnet, dass** die Austragsöffnung verschlossen ist und vor der Applikation des gemischten Knochenzements zu öffnen ist, wobei bevorzugt die Austragsöffnung ein Austragsrohr (12) ist und die Austragsöffnung gegenüberliegend vom Austragskolben (4) angeordnet ist.

5. Vorrichtung nach einem der vorangehenden Ansprüche, **dadurch gekennzeichnet, dass** der erste Behälter (1) einen zylindrischen Innenraum aufweist und der Austragskolben (4) in dem Innenraum des ersten Behälters (1) eine Passform entsprechend der Grundfläche des zylindrischen Innenraums aufweist.

6. Vorrichtung nach einem der vorangehenden Ansprüche, **dadurch gekennzeichnet, dass** der zweite Behälter (18) eine durchstechbare Membran (20) als Begrenzung aufweist und in dem ersten Behälter (1) ein Dorn (24) angeordnet ist, der derart gegen die Membran (20) beweglich gelagert ist, so dass der Dorn (24) die Membran (20) durchstößt und damit den zweiten Behälter öffnet, so dass der Inhalt des zweiten Behälters (18) mit dem Inhalt des ersten Behälters (1) mischbar ist.

7. Vorrichtung nach Anspruch 6, **dadurch gekennzeichnet, dass**
die Austragsöffnung in einem Austragsrohr (12) angeordnet ist, der Dorn (24) am Austragskolben (4) angeordnet ist und der zweite Behälter (18) durch Bereiche der Innenwände des Austragsrohrs (12), einen zu öffnenden Verschluss (26) des Austragsrohrs (12) und die Membran (20) begrenzt ist, wobei das Austragsrohr (12) axial beweglich in einer Durchführung durch eine Begrenzung des ersten Behälters (1) gelagert ist, so dass das Austragsrohr (12) mit der Membran (20) auf den Dorn (24) drückbar ist.

8. Vorrichtung nach einem der vorangehenden Ansprüche, **dadurch gekennzeichnet, dass** zumindest ein Volumenausgleichselement (4, 6) axial beweglich in dem ersten Behälter (1) angeordnet ist, wobei bevorzugt das zumindest eine Volumenausgleichselement (4, 6) eine gasdichte Durchführung aufweist, durch die ein Stab oder Rohr (12) zum Bedienen der Mischeinrichtung (22) hindurchgeführt ist, besonders bevorzugt das Austragsrohr (12) zum Bedienen der Mischeinrichtung (22) hindurchgeführt ist.

9. Vorrichtung nach einem der vorangehenden Ansprüche, **dadurch gekennzeichnet, dass** ein Volumenausgleichselement (4) durch den Austragskolben (4) realisiert ist und die Bewegung des Austragskolbens (4) aus dem ersten Behälter (1) heraus durch ein Begrenzungselement (32) begrenzt ist, wobei das Begrenzungselement (32) bevorzugt eine Rastung (32) ist, die in eine Gegenrastung am Austragskolben (4) greift.

10. Vorrichtung nach einem der vorangehenden Ansprüche, **dadurch gekennzeichnet, dass** ein Volumenausgleichselement (6) gegenüber dem Austragskolben (4) in dem ersten Behälter (1) als beweglich gelagertes zylindrisches Volumenausgleichselement (6) angeordnet ist, wobei bevorzugt das Volumenausgleichselement (6) eine gasdichte Durchführung für ein Rohr (12) oder einen Stab aufweist, das oder der beweglich in der Durchführung gelagert ist.

11. Vorrichtung nach einem der vorangehenden Ansprüche, **dadurch gekennzeichnet, dass** ein Kern (14) als Verschluss der Austragöffnung vorgesehen ist, der aus der Austragsöffnung, insbesondere dem Austragsrohr (12) herausnehmbar ist, wobei bevorzugt der Kern (14) eine Aufnahme für einen Dorn (24) aufweist, besonders bevorzugt eine zu dem Dorn (24) passende Aufnahme.

12. Vorrichtung nach Anspruch 11, **dadurch gekennzeichnet, dass**
der Kern (14) an der dem ersten Behälter (1) zugewandten Seite einen Abstreifer aufweist, der beim Herausziehen des Kerns (14) Pulver oder Zementteig an der Innenseite der Austragsöffnung, insbesondere des Austragsrohrs (12) abstreift.

13. Vorrichtung nach einem der vorangehenden Ansprüche, **dadurch gekennzeichnet, dass** zumindest ein Volumenausgleichselement (6) über eine elastische Feder (30) gegen den ersten Behälter (1) beweglich gelagert ist, wobei die Feder (30) das Volumenausgleichselement (6) in den Innenraum des ersten Behälters (1) drückt.

14. Vorrichtung nach einem der vorangehenden Ansprüche, **dadurch gekennzeichnet, dass** eine Seite mit einem Austragsrohr (12) von einer Verschlusskappe (26) verschlossen ist, die eine Durchführung für das Austragsrohr (12) aufweist, die ein Volumenausgleichselement (6) abdeckt und die zumindest eine Öffnung (28) zum Ermöglichen eines Druckausgleichs zwischen der Umgebung und dem Zwischenraum zwischen der Verschlusskappe (26) und dem abgedeckten Volumenausgleichselement (6) aufweist, wobei bevorzugt eine elastische Spiralfeder (30) zum Drücken des Volumenausgleichselements (6) in den Innenraum des ersten Behälters (1) zwischen der Verschlusskappe (26) und dem abgedeckten Volumenausgleichselement (6) angeordnet ist, wobei besonders bevorzugt die Spiralfeder (30) um das Austragsrohr (12) herum angeordnet ist.

15. Verfahren zum Herstellen eines Polymethylmethacrylat-Knochenzements mit einer Vorrichtung nach einem der vorangehenden Ansprüche, **gekennzeichnet durch** die Schritte:
A) Bereitstellen der Vorrichtung, wobei der erste Behälter (1) mit einer ersten pastenförmigen Komponente des PMMA-Knochenzements gefüllt ist und der zweite Behälter (18) mit einer zweiten, vorzugsweise flüssigen Komponente des PMMA-Knochenzements gefüllt ist;
B) Öffnen des zweiten Behälters (18);
C) Mischen der beiden Komponenten **durch** Bewegen der Mischeinrichtung (22), wobei beim Bewegen der Mischeinrichtung (22) ein mit der Mischeinrichtung (22) verbundener Stab oder verbundenes Rohr (12) in den ersten Behälter (1) wiederholt hinein geschoben und heraus gezogen wird, wobei die Volumenveränderung des Inhalts des ersten Behälters (1) **durch** das Hineinschieben und Herausziehen **durch** eine Bewegung des zumindest einen Volumenausgleichselements (4, 6) ausgeglichen wird; und
D) Applizieren des gemischten Knochenzements **durch** Vortreiben des Austragskolbens (4) in dem ersten Behälter (1).

16. Verfahren nach Anspruch 15, **dadurch gekennzeichnet, dass**
die Austragsöffnung zunächst durch einen Kern (14) verschlossen ist und nach Schritt C) der Kern (14) entfernt wird.

17. Verfahren nach Anspruch 15 oder 16, **dadurch gekennzeichnet, dass**
zum Öffnen des zweiten Behälters (18) ein Austragsrohr (12), das den zweiten Behälter (18) enthält, auf einen Dorn (24) am Austragskolben (4) gedrückt wird und dadurch eine Membran (20) oder eine Folie (20), die den zweiten Behälter (18) abschließt, durchstochen wird und dadurch der zweite Behälter (18) geöffnet wird.

18. Verfahren nach einem der Ansprüche 15 bis 17, **dadurch gekennzeichnet, dass**
die Mischeinrichtung (22) mit einem Austragsrohr (12) verbunden ist und der Inhalt des ersten Behälters (1) gemischt wird, indem die Mischeinrichtung (22) durch hineinbewegen und herausbewegen des Austragsrohrs (12) in den ersten Behälter (1) die Mischeinrichtung (22) in dem ersten Behälter (1) bewegt wird, wobei bevorzugt zusätzlich die Mischeinrichtung (22) durch Drehen des Austragsrohrs (12) im ersten Behälter (1) gedreht wird.

19. Verfahren nach einem der Ansprüche 15 bis 18, **dadurch gekennzeichnet, dass** vor Schritt A) der erste Behälter (1) mit einer Komponente des Knochenzements gefüllt wird und das Innere des ersten Behälters (1) zuvor entgast und sterilisiert wird, wobei dazu bevorzugt der Austragskolben (4) arretiert wird.

## Claims

1. Device for storing, mixing, and applying polymethylmethacrylate bone cement, comprising a first container (1) for a first pasty component of the bone cement, a dispensing plunger (4) arranged in the first container (1) such that the dispensing plunger (4) is shiftable for pressing the content of the first container (1) out of a dispensing opening, a mixing facility (22) for mixing the content of the first container (1), whereby the mixing facility (22) is arranged in the first container (1) and the mixing facility (22) is movable in the first container (1) from outside for mixing, and at least one second container (18), for at least one second component of the bone cement, arranged in or on said first container (1), whereby the second container (18) is openable, such that the contents of the first container (1) and second container (18) can be mixed with each other in the first container (1), **characterized in that** at least a boundary surface of the first container (1) is formed by a mobile volume compensation element (4, 6), which is movable
by sliding a rod or tube (12) connected to the mixing facility (22) in the first container (1) and by pulling the rod or tube (12) connected to the mixing facility (22) out of the first container (1) and/or
by introduction of the second component into the first container (1).

2. The device according to claim 1, wherein the dispensing plunger (4) is lockable or is locked with respect to the first container (1), preferably on the end of the first container (1) opposite from the dispensing opening.

3. The device according to claim 1 or 2, wherein the mixing facility (22) is connected to the rod or tube (12), whereby the rod or tube (12) is mobile in axial direction through a gas-tight feed-through through a boundary (3, 6) of the first container (1) such that the mixing facility (22) is movable through a motion of the rod or tube (12) in order to mix the content of the first container (1), whereby preferably the rod or tube (12) is suspended as in a bearing such that the rod or tube (12) is axially rotatable.

4. The device according to any of the preceding claims, wherein the dispensing opening is closed and has to be opened before application of the mixed bone cement, whereby preferably the dispensing opening is a dispensing tube (12) and the dispensing opening is arranged opposite from the dispensing plunger (4).

5. The device according to any of the preceding claims, wherein the first container (1) comprises a cylindrical internal space, and the dispensing plunger (4) in the internal space of the first container (1) is of a shape matching the base area of the cylindrical internal space.

6. The device according to any of the preceding claims, wherein the second container (18) comprises a membrane (20), that can be punctured, for a boundary and a mandrel (24) is arranged in the first container (1) and is supported as in a bearing such as to be mobile with respect to the membrane (20) such that the mandrel (24) punctures through the membrane (20) and thus opens the second container such that the content of the second container (18) is mixable with the content of the first container (1).

7. The device according to claim 6, wherein the dispensing opening is arranged in a dispensing tube (12), in that the mandrel (24) is arranged on the dispensing plunger (4), and in that the second container (18) has regions of the internal walls of the dispensing tube (12), a closure (26) of the dispensing tube (12) that is openable, and the membrane (20) for its boundaries, whereby the dispensing tube (12) is supported as in a bearing such as to be axially mobile in a feed-through through a boundary of the first container (1) such that the dispensing tube (12) including the membrane (20) is pressable onto the mandrel (24).

8. The device according to any of the preceding claims, wherein at least one volume compensation element (4, 6) is arranged in the first container (1) such as to be mobile in an axial direction, whereby preferably the at least one volume compensation element (4, 6) comprises a gas-tight feed-through through which a rod or tube (12) is guided for operation of the mixing facility (22), especially preferably through which the dispensing tube (12) is guided for operating the mixing facility (22).

9. The device according to any of the preceding claims, wherein a volume compensation element (4) is implemented by means of the dispensing plunger (4) and in that the motion of the dispensing plunger (4) out of the first container (1) is limited by a boundary element (32), whereby the boundary element (32) preferably is a snap-in means (32) engaging an opposite snap-in means on the dispensing plunger (4).

10. The device according to any of the preceding claims, wherein a volume compensation element (6) is arranged opposite from the dispensing plunger (4) in the first container (1) as a cylindrical volume compensation element (6) that is supported as in a bearing such as to be mobile, whereby preferably the volume compensation element (6) comprises a gas-tight feed-through for a tube (12) or a rod that is supported as in a bearing in the feed-through such as to be mobile.

11. The device according to any of the preceding claims, wherein a core (14) is provided as closure of the dispensing opening, whereby the core (14) is removable from the dispensing opening, whereby preferably the core (14) comprises a receptacle for the mandrel (24), especially preferable a receptacle fitting to the mandrel (24).

12. The device according to claim 11, wherein the core (14) comprises a wiper on the side facing the first container (1) that wipes off powder or cement dough on the inside of the dispensing opening, in particular of the inside of the dispensing tube (12), when the core (14) is being pulled out.

13. The device according to any of the preceding claims, wherein at least one volume compensation element (6) is supported as in a bearing through an elastic spring (30) such as to be mobile with respect to the first container (1), whereby the spring (30) pushes the volume compensation element (6) into the internal space of the first container (1).

14. The device according to any of the preceding claims, wherein the side with the dispensing tube (12) is closed by a closure cap (26) comprising a feed-through for the dispensing tube (12), that covers a volume compensation element (6) and comprises at least one opening (28) for enabling pressure equalisation between the surroundings and the intervening space between the closure cap (26) and the covered volume compensation element (6), whereby preferably an elastic helical spring (30) for pushing the volume compensation element (6) into the internal space of the first container (1) is arranged between the closure cap (26) and the covered volume compensation element (6), whereby especially preferably the helical spring (30) is arranged about the dispensing tube (12).

15. A method for producing a polymethylmethacrylate bone cement using the device according to any of the preceding claims, the method comprising the steps of:
A) providing the device, whereby the first container (1) is filled with a first pasty component of the polymethylmethacrylate bone cement and the second container (18) is filled with a second, preferably liquid, component of the polymethylmethacrylate bone cement;
B) opening the second container (18);
C) mixing of the two components through moving the mixing facility (22), whereby moving the mixing facility (22) is associated with a rod or tube (12), that is connected to the mixing facility, being pushed into and pulled out of the first container (1) repeatedly, whereby the volume change of the content of the first container (1) due to the pushing in and pulling out is compensated for through a motion of the at least one volume compensation element (4, 6); and
D) applying the mixed bone cement through propelling the dispensing plunger (4) forward in the first container (1).

16. The method according to claim 15, wherein the dispensing opening is initially closed by a core (14) and the core (14) is removed after step C).

17. The method according to claim 15 or 16, wherein, for opening the second container (18), a dispensing tube (12) containing the second container (18) is pushed onto a mandrel (24) on the dispensing plunger (4) and thus a membrane (20) or a film/foil (20) closing the second container (18) is punctured and the second container (18) is opened.

18. The method according to any of the claims 15 to 17, wherein the mixing facility (22) is connected to the dispensing tube (12) and the content of the first container (1) is mixed by moving the mixing facility (22) in the first container (1) by moving the dispensing tube (12) into and out of the first container (1), whereby preferably, in addition, the mixing facility (22) is being rotated by rotating the dispensing tube (12) in the first container (1).

19. The method according to any of the claims 15 to 18, wherein the first container (1) is filled with a component of the bone cement before step A) and the inside of the first container (1) is first degassed and sterilised, whereby preferably the dispensing plunger (4) is locked in place therefore.

## Revendications

1. Dispositif de stockage, de mélange et d'application d'un ciment osseux en polyméthylméthacrylate, présentant un premier récipient (1) pour un premier composant de forme pâteuse du ciment osseux, un piston d'extraction (4) disposé de façon à pouvoir se déplacer dans le premier récipient (1) pour sortir par pression le contenu du premier récipient (1) par un orifice d'extraction, un système de mélange (22) pour mélanger le contenu du premier récipient (1), où le système de mélange (22) est disposé dans le premier récipient (1) et le système de mélange (22) peut être déplacé de l'extérieur dans le premier récipient (1) pour faire le mélange, et au moins un deuxième récipient (18) est disposé dans ou sur le premier récipient (1) pour au moins un deuxième composant du ciment osseux, où le deuxième récipient (18) peut être ouvert de sorte que les contenus du premier récipient (1) et du deuxième récipient (18) peuvent être mélangés dans le premier récipient (1), **caractérisé en ce qu'**au moins une surface de délimitation du premier récipient (1) est formée par un élément de compensation de volume (4, 6), qui se déplace
par l'insertion d'une tige ou d'un tube (12) relié(e) avec le système de mélange (22) dans le premier récipient (1) et le retrait de la tige ou du tube (12) du premier récipient (1), et/ou par l'introduction du deuxième composant dans le premier récipient (1).

2. Dispositif selon la revendication 1, **caractérisé en ce que**
le piston d'extraction (4) peut être bloqué, ou est bloqué, contre le premier récipient (1), de préférence, à l'extrémité du premier récipient (1) située en face de l'orifice d'extraction.

3. Dispositif selon la revendication 1 ou 2, **caractérisé en ce que**
le système de mélange (22) est relié avec la tige ou le tube (12), où la tige ou le tube (12) peuvent se déplacer axialement à travers par l'intermédiaire d'un passage étanche aux gaz par une délimitation (3, 6) du premier récipient (1) de sorte que le système de mélange (22) peut se déplacer par un mouvement de la tige ou du tube (12) pour la réalisation du mélange du contenu du premier récipient (1), où, de préférence, la tige ou le tube (12) sont logés pour être mis en rotation axialement.

4. Dispositif selon l'une des revendications précédentes, **caractérisé en ce que** l'orifice d'extraction est fermé et est à ouvrir avant l'application du ciment osseux mélangé, où, de préférence, l'orifice d'extraction est un tube d'extraction (12) et l'orifice d'extraction est disposé, se situant en face du piston d'extraction (4).

5. Dispositif selon l'une des revendications précédentes, **caractérisé en ce que**
le premier récipient (1) présente un espace intérieur cylindrique et le piston d'extraction (4) présente un ajustement correspondant à la surface de base de l'espace intérieur cylindrique dans l'espace intérieur du premier récipient (1).

6. Dispositif selon l'une des revendications précédentes, **caractérisé en ce que**
le deuxième récipient (18) présente une membrane (20) pouvant être transpercée servant de délimitation et qu'une pointe (24) est disposée dans le premier récipient (1), qui est logée en pouvant se déplacer contre la membrane (20) de façon que la pointe (24) traverse la membrane (20) et ouvre ainsi le deuxième récipient de sorte que le contenu du deuxième récipient (18) peut être mélangé avec le contenu du premier récipient (1).

7. Dispositif selon la revendication 6, **caractérisé en ce que**
l'orifice d'extraction est disposé dans un tube d'extraction (12), la pointe (24) est disposée sur le piston d'extraction (4), et le deuxième récipient (18) est délimité par des zones des parois internes du tube d'extraction (12), un système obturateur (26) ouvert du tube d'extraction (12) et par la membrane (20), où le tube d'extraction (12) est logé en pouvant se déplacer axialement dans un passage par une limitation du premier récipient (1) de sorte que le tube d'extraction (12) peut presser avec la membrane (20) sur la pointe (24).

8. Dispositif selon l'une des revendications précédentes, **caractérisé en ce**
**qu'**au moins un élément de compensation de volume (4, 6) est disposé dans le premier récipient (1) en pouvant se déplacer axialement, où, de préférence, l'au moins un élément de compensation de volume (4, 6) présente un passage étanche aux gaz, par lequel est mené(e) une tige ou un tube (12) pour la mise en oeuvre du système de mélange (22), de manière particulièrement préférée, le tube d'extraction (12) est mené à travers le passage pour la mise en oeuvre du système de mélange (22).

9. Dispositif selon l'une des revendications précédentes, **caractérisé en ce**
**qu'**un élément de compensation de volume (4) est réalisé par le piston d'extraction (4) et que le mouvement du piston d'extraction (4) hors du premier récipient (1) est limité par un élément de limitation (32), où l'élément de limitation (32) est de préférence un système de blocage (32), qui se met en prise avec un système de blocage complémentaire sur le piston d'extraction (4).

10. Dispositif selon l'une des revendications précédentes, **caractérisé en ce**
**qu'**un élément de compensation de volume (6) est disposé en face du piston d'extraction (4) dans le premier récipient (1) sous la forme d'un élément de compensation de volume (6) cylindrique logé en pouvant se déplacer, où, de préférence, l'élément de compensation de volume (6) présente un passage étanche aux gaz pour un tube (12) ou une tige, qui est logé(e) dans le passage en pouvant se déplacer.

11. Dispositif selon l'une des revendications précédentes, **caractérisé en ce**
**qu'**une partie centrale (14) est prévue en tant que système de fermeture de l'orifice d'extraction, qui peut être extrait hors de l'orifice d'extraction, notamment du tube d'extraction (12), où, de préférence, la partie centrale (14) présente un réceptacle pour une pointe (24), de manière particulièrement préférée, un réceptacle ajusté à la pointe (24).

12. Dispositif selon la revendication 11, **caractérisé en ce que**
la partie centrale (24) présente un racleur sur la face orientée vers le premier récipient (1) qui racle la poudre ou la pâte de ciment sur la face interne de l'orifice d'extraction, notamment du tube d'extraction (12) lors du retrait de la partie centrale (14).

13. Dispositif selon l'une des revendications précédentes, **caractérisé en ce**
**qu'**au moins un élément de compensation de volume (6) est logé en pouvant se déplacer contre le premier récipient (1) par l'intermédiaire d'un ressort (30) élastique, où le ressort (30) exerce une pression sur l'élément de compensation de volume (6) dans l'espace interne du premier récipient (1).

14. Dispositif selon l'une des revendications précédentes, **caractérisé en ce**
**qu'**une face est fermée avec un tube d'extraction (12) par un capuchon de fermeture (26), qui présente un passage pour le tube d'extraction (12), qui recouvre un élément de compensation de volume (6) et qui présente au moins une orifice (28) pour permettre une compensation de la pression entre l'environnement et l'espace intermédiaire entre le capuchon de fermeture (26) et l'élément de compensation de volume (6) recouvert, où, de préférence, un ressort en spirale (30) élastique est disposé pour l'exercice d'une pression sur l'élément de compensation de volume (6) dans l'espace intérieur du premier récipient (1) entre le capuchon de fermeture (26) et l'élément de compensation de volume (6) recouvert, où de manière particulièrement préférée, le ressort en spirale (30) est disposé autour du tube d'extraction (12).

15. Procédé de fabrication d'un ciment osseux en polyméthylméthacrylate avec un dispositif selon l'une des revendications précédentes, **caractérisé par** les étapes :
A) de mise à disposition du dispositif, où le premier récipient (1) est rempli avec un premier composant de forme pâteuse du ciment osseux en PMMA et le deuxième récipient (18) est rempli avec un deuxième composant, de préférence liquide, du ciment osseux en PMMA ;
B) d'ouverture du deuxième récipient (18) ;
C) de mélange des deux composants par un déplacement du système de mélange (22), où, lors du déplacement du système de mélange (22), une tige reliée avec le système de mélange (22) ou un tube (12) relié sont introduits et sortis de manière répétée à l'intérieur, où la variation de volume du contenu du premier récipient (1) est compensée par l'introduction et le retrait par au moins un mouvement de l'au moins un élément de compensation de volume (4, 6) ; et
D) d'application du ciment osseux mélangé par l'avancement du piston d'extraction (4) dans le premier récipient (1).

16. Procédé selon la revendication 15, **caractérisé en ce que**
l'orifice d'extraction est d'abord fermé par une partie centrale (14) et, après l'étape C), la partie centrale (14) est enlevée.

17. Procédé selon la revendication 15 ou 16, **caractérisé en ce que**,
pour l'ouverture du deuxième récipient (18), un tube d'extraction (12) qui contient le deuxième récipient (18) est pressé sur une pointe (24) sur le piston d'extraction (4) et qu'ainsi une membrane (20) ou un film (20), qui ferme le deuxième récipient (18), est ouvert(e) par le percement et qu'ainsi le deuxième récipient (18) est ouvert.

18. Procédé selon l'une des revendications 15 à 17, **caractérisé en ce que**
le système de mélange (22) est relié avec un tube d'extraction (12) et le contenu du premier récipient (1) est mélangé **en ce que** le système de mélange (22), par l'introduction et le retrait du tube d'extraction (12) dans le premier récipient (1), le système de mélange (22) est déplacé dans le premier récipient (1), où, de préférence, en outre, le système de mélange (22) est mis en rotation dans le premier récipient (1) par la rotation du tube d'extraction (12).

19. Procédé selon l'une des revendications 15 à 18, **caractérisé en ce**
**qu'**avant l'étape A), le premier récipient (1) est rempli avec un composant du ciment osseux et l'intérieur du premier récipient (1) est auparavant dégazé et stérilisé, où, pour cela, de préférence, le piston d'extraction (4) est bloqué.
